# FASCICULE DE BREVET EUROPEEN

(11) **EP 3 107 253 B1**
(45) Date de publication et mention de la délivrance du brevet: **08.07.2020**
(21) Numéro de dépôt: 16170087.7
(22) Date de dépôt: 18.05.2016
(51) Int. Cl.: H04L 12/931, H04L 12/751, H04L 12/933

(54) **TRANSFORMATION D'INFRASTRUCTURES RÉSEAUX NON STRUCTURÉES EN TOPOLOGIES VIRTUELLES STRUCTURÉES ADAPTÉES A DES ALGORITHMES DE ROUTAGE SPÉCIFIQUES**
TRANSFORMATION VON NICHT STRUKTURIERTEN NETZINFRASTRUKTUREN IN STRUKTURIERTE VIRTUELLE TOPOLOGIEN, DIE AN SPEZIFISCHE ROUTING-ALGORITHMEN GEKOPPELT SIND
TRANSFORMATION OF UNSTRUCTURED NETWORK INFRASTRUCTURES INTO STRUCTURED VIRTUAL TOPOLOGIES ADAPTED TO SPECIFIC ROUTING ALGORITHMS

(30) Priorité: 15.06.2015 FR 1555428
(43) Date de publication de la demande: 21.12.2016
(73) Titulaire: BULL SAS, 78340 Les Clayes Sous Bois (FR)
(72) Inventeur: QUINTIN, Jean-Noël, 92340 Bourg la Reine (FR); CADY, Alain, 78340 Les Clayes sous Bois France (FR)
(74) Mandataire: Novagraaf Technologies

(56) Documents cités:
- WO-A2-02/062076
- US-A1- 2014 204 805
- US-A1- 2015 139 035

## Description

La présente invention porte, généralement, sur l'adaptation d'une topologie de réseau « haut-débit » à un algorithme de routage spécifique, et plus particulièrement à l'adaptation d'une topologie non-structurée à un algorithme de routage destiné à une topologie structurée.

Les structures logiques d'un réseau haut-débit, dites topologies, se répartissent généralement en deux classes : structurées et non-structurées. Les topologies structurées désignent les topologies définies par un formalisme mathématique (description théorique). Par exemple, les PGFT, pour « Parallel Ports Generalized Fat Trees » (Zahavi E., "D-Mod-K routing providing non-blocking traffic for shift permutations on real life fat trees", http://webee.technion.ac.il/publication-link/index/id/574, 2010) sont décrits par une formule permettant de reconstruire la topologie à partir d'un ensemble de facteurs. On en cite, aussi, les hypercubes (Bhuyan, L. N., & Agrawal, D. P. (1984), "Generalized hypercube and hyperbus structures for a computer network", Computers, IEEE Transactions on, 100(4), 323-333). Ces structures de réseaux ont été étudiées théoriquement pour transmettre efficacement les messages entre les machines. Pour réaliser les transmissions de manière performante au sein du réseau, des algorithmes de routage dédiés à ces topologies ont été développés. Ces algorithmes sont aussi présents dans les documents précédemment cités. Ces algorithmes sont performants mais utilisables uniquement avec les topologies suivant le formalisme pour lequel ils ont été développés.

Le document de la technique antérieure WO 02/062076 décrit une solution pour la multidiffusion distribuée sur un réseau ATM, dans laquelle un arbre de multidiffusion principal est joint en ajoutant une feuille virtuelle en tant que sous-arbre de multidiffusion.

A l'inverse, les topologies non structurées ne suivent pas de formalisme spécifique et/ou n'ont pas été étudiées pour le routage. Généralement, ce sont des topologies ne respectant pas de construction particulière. Elles sont potentiellement proches d'un formalisme mais ne peuvent pas être prises en compte par l'algorithme de routage.

Il s'ensuit qu'une topologie structurée favorise les performances des algorithmes de routage, tant en terme d'efficacité de routage qu'au regard de leur temps d'exécution. L'utilisation des algorithmes de routage destinés aux topologies structurées tels que « Flattened-Butterfly », « HyperX », « Tore », ou « PGFT » confirment l'intérêt de ce type de topologie de réseau.

Cependant, une topologie de réseau structurée est coûteuse tant en nombre de commutateurs réseau (ou en terminologie anglo-saxonne « switch ») que de câbles. Ainsi, réduire le coût de l'infrastructure réseau en diminuant le nombre de commutateurs réseau tout en conservant les performances en termes d'efficacité de routage est devenu une des préoccupations des architectes réseau.

En l'occurrence, en réduisant le nombre des commutateurs réseau, les caractéristiques théoriques de la topologie ne sont plus préservées et les algorithmes de routage qui lui sont spécifiques ne sont, par conséquent, plus utilisables en l'état. En effet, sachant qu'une étape d'analyse et de validation de la structure de la topologie physique est généralement requise pour réaliser un routage de topologie, si la structure d'une topologie est modifiée de sorte qu'elle n'est plus adaptée à l'algorithme de routage qui lui est préalablement destiné, le routage ne peut y être réalisé selon cet algorithme de routage.

A cet égard, les solutions connues, comme celle proposée par le logiciel « OpenSM » pour « InfiniBand », s'occupent uniquement de la topologie physique. En particulier, selon ces solutions, si les caractéristiques extraites d'une topologie physique modifiée ne correspondent pas aux attentes de l'algorithme de routage, une solution de repli basée sur un algorithme plus générique, moins efficace et plus coûteux en temps d'exécution est généralement adoptée.

Par ailleurs, la plupart des commutateurs réseau actuels utilisent une table de routage unique. Il n'est, donc, pas possible de considérer ce type de commutateurs réseau comme plusieurs entités distinctes pour pallier une réduction dans leur nombre. Autrement, la table de routage d'un communicateur réseau serait écrite plusieurs fois avec des données conflictuelles ne pouvant être fusionnées. En outre, pour un routage efficace, une destination devrait être atteinte par deux liens différents indépendamment du lien par lequel le paquet arrive, ce qui ne peut être obtenu avec une unique table de routage par commutateur réseau.

Un objet de la présente invention est, donc, de remédier aux inconvénients précités.

Un autre objet de la présente invention est d'adapter une topologie de réseau, qui suite à une modification dans sa structure (notamment, en réduisant le nombre de commutateurs réseau) n'est plus adaptée à l'algorithme de routage qui lui est spécifique, à ce même algorithme de routage de sorte à conserver les performances de routage dans ce réseau haut-débit.

Un autre objet de la présente invention est de pouvoir réduire le coût d'une topologie structurée tout en demeurant adaptée à un algorithme de routage destiné à une topologie structurée.

A cette fin, l'invention se rapporte, selon un premier aspect, à une méthode d'extraction, à partir d'une topologie physique de réseau, d'une topologie virtuelle adaptée à un algorithme de routage prédéfini, la topologie physique de réseau incluant une pluralité de commutateurs connectés les uns aux autres à l'aide de leurs ports pour recevoir et/ou transmettre des paquets vers ou depuis des commutateurs feuille de cette topologie physique de réseau, cette topologie physique de réseau étant différente d'une topologie physique de réseau de type prédéfini de topologie de réseau adaptée à l'algorithme de routage prédéfini, cette méthode comprenant les étapes suivantes:
a) identification, dans la topologie physique de réseau, d'une pluralité de sous-topologies, ces sous-topologies n'ayant pas de commutateur en commun, chaque sous-topologie étant du type prédéfini de topologie de réseau et incluant au moins un commutateur feuille, aucun commutateur d'une sous-topologie n'étant connecté à un commutateur d'une autre sous-topologie ;
b) extension de chaque sous-topologies en y incluant un ou plusieurs commutateurs qui lui sont directement connectés et n'étant directement connectés à aucune autre sous-topologie de sorte que la sous-topologie étendue soit du type prédéfini de topologie de réseau ;
c) lorsqu'un commutateur est directement connecté à plus d'une sous-topologie, scission de ce commutateur en autant de commutateurs virtuels, chaque commutateur virtuel comprenant le ou les ports du commutateur scindé à l'aide desquels ce commutateur scindé est connecté aux commutateur(s) d'une sous-topologie, les ports à l'aide desquels le commutateur scindé est connecté à un commutateur n'appartenant encore à aucune sous-topologie étant répartis entre les commutateurs virtuels, ces commutateurs virtuels étant considérés comme étant des commutateurs;
d) répétition des étapes b) et c) jusqu'à ce que chaque commutateur soit compris dans une sous-topologie, la topologie virtuelle étant composée desdites sous-topologies.

Avantageusement, cette méthode comprend, en outre, une étape d'utilisation par l'algorithme de routage de la topologie virtuelle extraite.

Avantageusement, la topologie virtuelle extraite est une topologie structurée adaptée à un algorithme de routage destiné à une topologie structurée, une topologie structurée étant une topologie définie par un formalisme mathématique prédéterminé.

Le type prédéfini de topologie de réseau est choisi parmi une liste comprenant une topologie de réseau PGFT, une topologie de réseau Tore 2D, une topologie de réseau Tore 3D, une topologie de réseau HyperX.

L'invention se rapporte, selon un deuxième aspect, à une méthode de routage dans une topologie physique non structurée d'un réseau haut-débit selon un algorithme de routage destiné à une topologie structurée, une topologie structurée étant une topologie définie par un formalisme mathématique prédéterminé, cette méthode comprend les étapes suivantes :
- découverte de la topologie physique non structurée ;
- analyse et validation de la topologie physique découverte ;
- extraction, selon la méthode d'extraction présentée ci-dessus, d'une topologie virtuelle adaptée à l'algorithme de routage ;
- analyse et validation de la structure de la topologie virtuelle extraite ;
- calcul des tables de routage adaptées à la topologie virtuelle extraite ;
- fusion des tables de routage associées à la topologie physique de sorte à obtenir des tables de routage adaptées à la topologie virtuelle structurée ;
- chargement, dans la topologie virtuelle extraite, des tables de routage fusionnées.

L'invention se rapporte, selon un troisième aspect, à un produit programme d'ordinateur implémenté sur un support mémoire, susceptible d'être mis en oeuvre au sein d'une unité de traitement informatique et comprenant des instructions pour la mise en œuvre de la méthode résumée ci-dessus.

D'autres caractéristiques et avantages de l'invention apparaîtront plus clairement et de manière concrète à la lecture de la description ci-après de modes de réalisation préférés, faite ci-après en référence aux dessins annexés dans lesquels :
- La FiG.1 illustre schématiquement une topologie de réseau structurée de type quelconque ;
- La FiG.2 illustre schématiquement une topologie de réseau structurée de type PGFT (« Parallel Ports Generalized Fat-Trees ») utilisée dans la suite pour illustrer un mode de réalisation ;
- La FiG.3 illustre schématiquement une topologie de réseau non-structurée pour y extraire une topologie virtuelle structurée adaptée à un algorithme de routage destiné à une topologie de réseau structurée ; et
- La FiG.4 et la FiG.5 illustrent schématiquement des étapes d'une méthode d'extraction d'une topologie virtuelle structurée à partir d'une topologie de réseau non structuré selon un mode de réalisation.

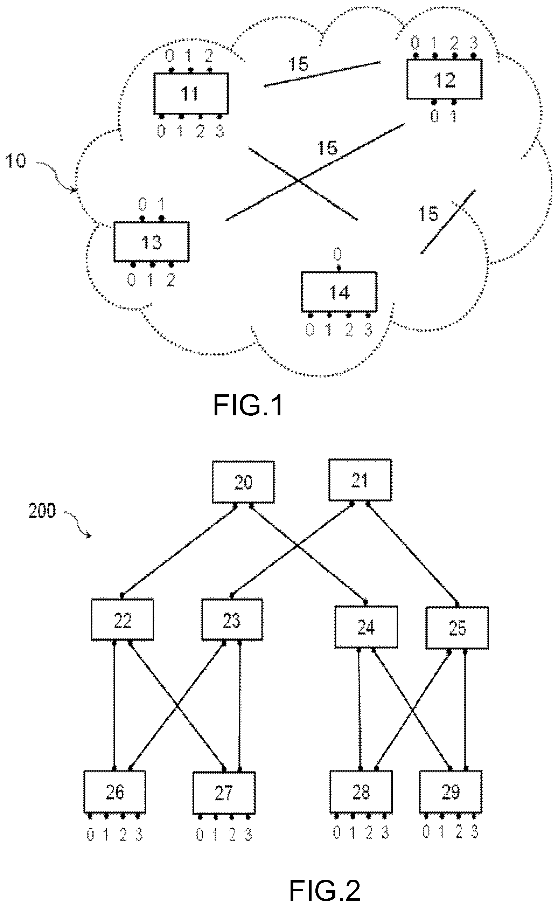

Sur la figure 1 est représentée une topologie structurée **10.** A titre d'exemples non-limitatifs, la topologie physique structurée **10** est de type « PGFT », Hypercube, Butterfly, HyperX, Tore 2D, Tore 3D, ou graphe de De Bruijn.

Un protocole de routage spécifique est mis en oeuvre dans cette topologie physique structurée **10.** Ce protocole de routage permet l'établissement de route(s), ou chemin(s), entre un nœud source et un nœud destination du réseau. Une route est formée par la succession de liens **15** et de commutateurs réseau **11-14** à emprunter pour connecter ces deux nœuds.

A cet égard, les commutateurs réseau **11-14** sont configurés pour réaliser un routage distribué basé sur des éléments de routage (par exemple des tables de routage) définissant les règles permettant l'acheminement des paquets de données à leur destination.

Par ailleurs, un commutateur réseau **11-14** comprend une table de routage par port **0-3.** Les éléments de routages sont indépendants du port **0-3** d'entrée d'un commutateur réseau **11-14** par lequel une donnée à router arrive. En revanche, le lien **15** sur lequel une donnée est routée dépend des ports **0-3** d'entrée et de la destination de cette donnée.

La mise en œuvre d'un protocole de routage dans la topologie physique structurée **10** est, généralement, précédée par les étapes suivantes:
- la découverte de la topologie physique structurée **10** du réseau ;
- l'analyse et la validation de la structure de cette topologie physique structurée **10** ;
- le calcul des tables de routage ; et
- le chargement des tables de routage.

La figure 2 illustre une topologie physique structurée **200** comprenant des commutateurs **20-29** et dans laquelle un algorithme de routage spécifique au PGFT peut être mis en œuvre. Le type particulier de topologie PGFT n'est donné, ici, qu'à titre illustratif et n'est en aucun cas limitatif. Les modes de réalisations décrits ci-dessus s'étendent directement et sans ambigüité aux différents types de topologie tels que, à titre non exhaustif, Hypercube, Butterfly, HyperX, Tore 2D, Tore 3D, ou graphe de De Bruijn.

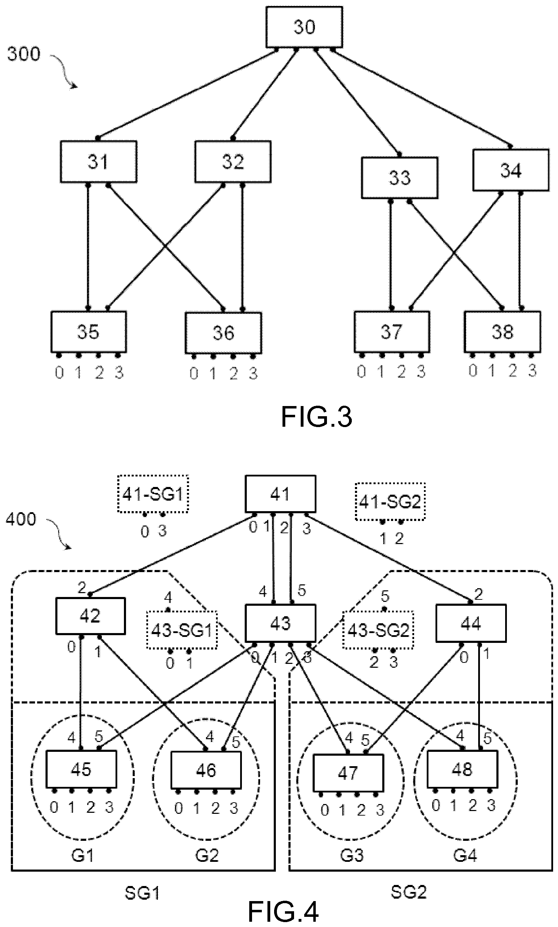

Les topologies structurées sont coûteuses, ce principalement à cause du nombre de commutateurs du haut du réseau (dits « top switch »). En l'espèce, la topologie physique structurée **200** de la figure 2 est un PGFT comprend deux commutateurs **20-21** du haut du réseau. En outre, dans le cadre théorique du routage de PGFT, il n'est pas possible de réduire le nombre des commutateurs **20-21** du haut du réseau sans perdre des propriétés caractéristiques de la topologie. A titre d'exemple, en remplaçant dans la figure 3, les commutateurs **20-21** du haut du réseau de la figure 2 par un seul commutateur **30** de haut de réseau, la structure de la topologie non-structurée **300** résultante n'est plus adaptée à l'algorithme de routage spécifique au PGFT. La topologie physique **300** de réseau est différente de la topologie physique **200** de réseau de type PGFT. Il s'ensuit que la structure modifiée de la topologie non-structurée **300** ne peut être validée, et le routage de type PGFT ne peut y être réalisé (notamment, parce qu'à partir du commutateur **30** du haut du réseau il y a au plus un chemin vers un commutateur feuille **35-38** en passant par les commutateurs **31-34**).

Plus généralement, afin de conserver l'algorithme de routage destiné à la topologie structurée **200** (dans cet exemple, PGFT) et pouvoir le mettre en oeuvre dans la topologie non-structurée **300,** une topologie virtuelle structurée est extraite à partir de la topologie non-structurée **300.**

Plus généralement, pour le routage dans une topologie non-structurée **300,** résultant de la modification d'une topologie structuré **200,** ce routage étant selon un protocole de routage destiné à la topologie structurée **200,** les étapes suivantes sont effectuées :
- découverte de la topologie physique modifiée **300** ;
- analyse et validation de la topologie physique découverte ;
- extraction d'une topologie virtuelle structurée adaptée à l'algorithme de routage qui est destiné à une topologie structurée ;
- analyse et validation de la structure de la topologie virtuelle structurée ;
- calcul des tables de routage adaptées à la topologie virtuelle structurée ;
- fusion des tables de routage associées à la topologie physique de sorte à obtenir les tables de routage adaptées à la topologie virtuelle structurée ;
- chargement des tables fusionnées.

L'étape d'extraction d'une topologie virtuelle structurée adaptée à l'algorithme de routage destiné à une topologie structurée a pour effet :
- la décorrélation de la topologie mémoire de la topologie physique ; et
- la séparation des commutateurs réseau en entités logiquement indépendantes.

Pour illustrer l'étape d'extraction d'une topologie virtuelle structurée adaptée à l'algorithme de routage, la topologie non-structurée **400** (figure 4) est utilisée à titre d'exemple seulement. La topologie non-structurée **400** est dite non-structurée parce que, entre autres, le commutateur **41** du haut du réseau dispose de deux chemins différents pour atteindre un commutateur feuille **45-48.** Cette topologie ne représente, donc, pas un PGFT.

Dans cet exemple, une topologie virtuelle **500** structurée en PGFT est extraite à partir d'une topologie physique non-structurée **400** qui n'est pas un PGFT. Les algorithmes de routage utilisent, par la suite, uniquement la topologie virtuelle structurée, et non pas la topologie physique (réelle) non-structurée **400** qui n'est pas supportée.

Pour identifier une telle topologie virtuelle structurée, on commence par considérer les commutateurs feuilles **45-48.** Les commutateurs feuille **45-48** sont ceux qui sont directement connectés aux noeuds de calculs. Chacun des commutateurs feuilles **45-48** est placé dans une sous-topologie **G1** : **45, G2** : **46, G3** : **47** et **G4** : **48.** Les sous-topologies **G1-G4** n'ont aucun commutateur en commun et chacune comprend un commutateur feuille. Chacune des sous-topologies **G1-G4** est considérée comme étant de type PGFT, tout comme le type de la topologie physique **200** de réseau. Les sous-topologies **G1-G4** ayant exactement les mêmes voisins sont, ensuite, fusionnées. En l'espèce, **G1** et **G2** sont fusionnées en une sous-topologie **SG1.** De même, **G3** et **G4** sont fusionnées en une sous-topologie **SG2.** En d'autres termes, les sous-topologies **G1-G4,** respectivement constituées des commutateurs feuille **45-48,** sont fusionnées en sous-topologies **SG1** et **SG2** de sorte que les sous-topologies **G1-G4** ayant les mêmes commutateurs voisin se trouvent dans une même sous-topologie **SG1** ou **SG2** (le(s) commutateur(s) voisin d'un certain commutateur **41-48** sont l'ensemble des commutateurs directement connectés à ce commutateur). Les nouvelles sous-topologies **SG1** et **SG2** sont de type PGFT.

En d'autres termes, en identifiant les commutateurs **42-44** directement connectés aux commutateurs feuille **45-48** de la topologie physique non-structurée **400** (ou les commutateurs **42-44** voisins des commutateurs feuille **45-48**), les commutateurs feuille **45-48** ayant les mêmes commutateurs voisins sont repartis en sous-topologies **SG1-SG2.** Ces sous-topologies **SG1-SG2** sont comprises dans la topologie virtuelle à extraire.

On considère maintenant les commutateurs **42-44** qui sont au dessus des commutateurs feuille **45-48** dans la topologie physique non-structurée **400.** Les commutateurs **42-44** sont les voisins direct (ou les premiers voisins) des commutateurs feuille **45-48.** Deux commutateurs **42-44** voisins direct des commutateurs feuille **45-48** sont séparés s'ils sont connectés à deux sous-topologies **SG1-SG2** différentes. Ainsi, un commutateur **42-44** qui est connecté uniquement à ou aux commutateur(s) d'une même sous-topologie **SG1-SG2** est inclus (ou ajouté) dans cette sous-topologie **SG1-SG2.** En l'espèce, le commutateur **42** est connecté uniquement à la sous-topologie **SG1.** Le commutateur **44** est connecté uniquement à la sous-topologie **SG2.** Les commutateurs **42** et **44** sont, ainsi, inclus respectivement dans la sous-topologie **SG1** et la sous-topologie **SG2.** En revanche, le commutateur **43** est connecté aux deux sous-topologies **SG1** et **SG2.** Ce commutateur **43** est scindé en deux commutateurs virtuels **43-SG1** et **43-SG2,** respectivement inclus dans la sous-topologie **SG1** et la sous-topologie **SG2.**

Les ports du commutateur **43** physique qui vient d'être scindé en deux commutateurs virtuels **43-SG1** et **43-SG2** sont à répartir entre ces deux commutateurs virtuels **43-SG1** et **43-SG2.**

Pour cela, on commence par considérer une des sous-topologies **SG1-SG2** (en l'espèce, **SG1**). On sélectionne un lien sortant de **SG1** avec pour origine une sous-topologie **G1-G2** de niveau inférieur (**G1** par exemple) et étant connecté au commutateur virtuel **43-SG1.** Le lien connectant le port **5** du commutateur **45** au port **0** du commutateur **43** (c'est-à-dire le lien [**45:5** → **43:0**]) est considéré. On recherche, ensuite, les liens connectant les autres sous-topologies de niveau inférieur incluses dans **SG1** au commutateur virtuel **43-SG1.** Le lien connectant le port **5** du commutateur **46** au port **1** du commutateur **43** (c'est-à-dire le lien [**46:5** → **43:1**]) est ajouté aux liens considérés. Puisque toutes les sous-topologies de niveau inférieur dans **SG1** (en l'occurrence, **G1** et **G2**) sont considérées, les ports **0** et **1** du commutateur **43** sont affectés au commutateur virtuel **43-SG1.** Le commutateur virtuel **43-SG1** avec ses ports **0** et **1** est ajouté à la sous-topologie **SG1.**

De même, pour la sous-topologie **SG2,** les ports **2** et **3** du commutateur **43** sont affectés au commutateur virtuel **43-SG2** qui est ajouté à la sous-topologie **SG2.**

Il s'ensuit que le commutateur **43** physique qui est connecté à ou aux commutateurs de la sous-topologie **SG1** et à ou aux commutateurs de la sous-topologie **SG2** est scindé en deux commutateurs virtuels **43-SG1** et **43-SG2.** Le commutateur virtuel « **43-SG1** », comprenant les ports **0-1** à l'aide desquels il est connecté à ou aux commutateurs de la sous-topologie **SG1** est affecté à cette sous-topologie **SG1.** Le commutateur virtuel **43-SG1,** comprenant les ports **2-3** à l'aide desquels il est connecté à ou aux commutateurs de la deuxième sous-topologie **SG2,** est affecté à cette sous-topologie **SG2.**

Les ports « montants » **4-5** du commutateur physique **43** sont aussi à repartir entre les sous-topologies **SG1** et **SG2** comprises dans la topologie virtuelle structurée.

A cet égard, les ports à l'aide desquels le commutateur **41** scindé est connecté à un commutateur n'appartenant encore à aucune sous-topologie, en l'espèce le connecteur **41,** sont repartis entres les commutateurs virtuels **43-SG1** et **43-SG2.** Cette répartition peut se faire d'une manière arbitraire. Dans l'exemple de la figure 4, les ports **4** et **5** du commutateur **41** sont, affectés, respectivement, au commutateur virtuel **43-SG1** et **43-SG2.**

Tout comme pour les commutateurs **42-44,** on considère maintenant les commutateurs au dessus dans une topologie physique non structurée **400.** Dans cet exemple, il n'y a que le commutateur **41** qui est connecté à plus d'une sous-topologie. Ce commutateur est donc scindé en autant de commutateurs virtuels que de sous-topologies auxquelles il est connecté, c'est-à-dire en deux commutateurs virtuels **41-SG1** et **41-SG2.**

En effet, pour les liens appartenant à des commutateurs partagés entre deux sous-topologies (**SG1** et **SG2**), un des ces liens partagés est considéré en le plaçant arbitrairement dans une des sous-topologies. Les liens connectant aux autres sous-topologies via un commutateur, virtuel ou non, non encore considérés sont recherchés. Le commutateur virtuel **41-SG1** comprend les ports **0** et **3.** Le deuxième commutateur virtuel **41-SG2** comprend les ports **1** et **2.** Les nouvelles sous-topologies **SG1** et **SG2** sont de type PGFT.

Plus généralement, l'extraction de la topologie virtuelle s'effectue par approches successives à partir des commutateurs feuilles **45-48** vers les commutateurs du haut du réseau (top switch) **41,** en ajoutant à chaque approche vers les commutateurs du haut du réseau les commutateurs aux sous-topologies auxquelles ils sont uniquement connectés et en scindant/fractionnant les commutateurs connectés à plus d'une sous-topologie en autant de commutateurs virtuels.

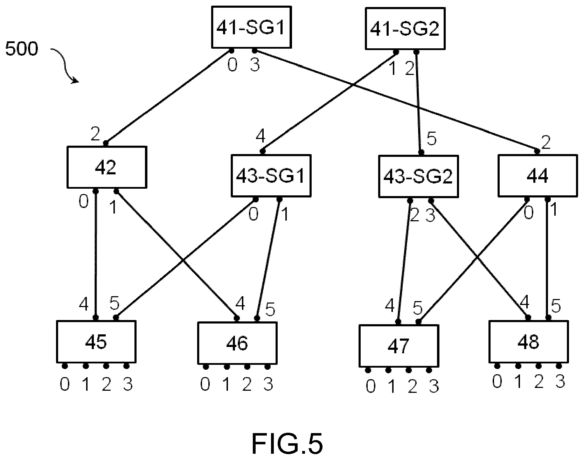

La figure 5 représente la topologie virtuelle structurée, composée de la sous-topologie **SG1** et **SG2,** qui vient d'être extraite de la topologie physique non-structurée **400.** Dans cet exemple illustratif, chacun des deux commutateurs physiques **41** et **43** est découpé en deux commutateurs virtuels. La topologie virtuelle structurée extraite comprend deux commutateurs de plus que la topologie réelle.

En considérant les deux commutateurs virtuels **43-SG1** et **43-SG2** produits à partir du commutateur physique **43,** l'un constitué des ports **0** et **1** et l'autre des ports **2** et **3,** l'algorithme de routage fait transiter les paquets arrivant sur les ports **0** et **1** vers la sous-topologie **SG1,** sans possibilité d'atteindre l'autre sous-topologie **SG2,** et inversement. De plus les éléments de routage « notamment les tables de routages » sont indépendants. Ainsi aucun conflit n'est possible : les tables de routage d'un port peuvent être écrites à une valeur sans que cela ne perturbe ou n'influence les autres ports. Il n'est, donc, pas possible de corrompre de la mémoire. En outre, le découpage virtuel des commutateurs permet de réarranger la topologie mémoire en une topologie adéquate pour les algorithmes de routage spécifiques, tout en réduisant les coûts.

La topologie virtuelle structurée extraite à partir d'une topologie physique non-structurée (elle-même obtenue à partir d'une topologie physique structurée modifiée) permet de conserver l'algorithme de routage initial. En effet, dans cet exemple, la topologie virtuelle structurée extraite est un vrai PGFT adapté au protocole de routage. Les algorithmes de routage dédiés à des topologies physiques de ce type fonctionneront sur les topologies virtuelles appartenant à ce même type de topologie. Plus généralement, la topologie utilisée par l'algorithme de routage est fondée sur la topologie virtuelle extraite au-dessus des réseaux physiques et logiques. Le maintien d'une topologie structurée virtuelle en accord avec l'algorithme de routage permet, ainsi, de conserver les performances de ce dernier.

Il est à noter que, même si le type, considéré ci-dessus, de la topologie de réseau est le PGFT (une topologie de réseau basée sur une structure d'arbre), la même approche s'applique à d'autres types de topologies de réseau de sorte que la méthode d'extraction de la topologie virtuelle peut être étendue à d'autres topologies. En effet, à titre d'exemples non-limitatifs,
- dans le cas d'une topologie de réseau de type Tore 2D (une topologie de réseau basé sur un rectangle), les premières sous-topologies **G1-G4** sont chaque commutateur feuille (commutateurs directement connectés à des nœuds de calcul). En partant d'une sous-topologie de type Tore 2-D, on étend cette sous-topologie de réseau en y incluant d'autres commutateurs de sorte que la nouvelle sous-topologie demeure de type Tore 2-D. Pour cela, un coté du rectangle de taille n d'une topologie de type Tore 2-D est pris en considération pour rechercher des commutateurs connectés à chacun de ses lignes. Lorsqu'un commutateur est connecté à différentes sous-topologies, celui-ci peut être divisé en plusieurs commutateurs virtuels afin d'étendre la dimension de ces sous-topologie;
- dans le cas d'une topologie de réseau de type Tore 3D (une topologie de réseau basée sur un pavé), les premières sous-topologies sont chaque commutateur feuille (commutateurs ayant des noeuds de calcul connectés). En partant d'une sous-topologie, on recherche un ensemble d'autres sous-topologies permettant l'extension selon le schéma de base d'une topologie Tore 3-D qui est un pavé. Chaque coté du pavé est pris en considération pour rechercher des commutateurs qui lui sont connectés. Si un commutateur est connecté à différentes sous-topologies, alors ce commutateur est divisé en autant de commutateurs virtuels ;
- dans le cas d'une topologie de réseau de type HyperX (une topologie de réseau basée sur un ensemble de commutateurs connectés tous interconnectés), les premières sous-topologies peuvent être les commutateurs feuilles (commutateurs directement connectés à des nœuds de calcul). L'ensemble des sous-topologies est étendu en parallèle en trouvant tous les commutateurs voisins interconnectés. Les commutateurs appartenant à une même sous-topologie doivent être connectés aux commutateurs de cette même sous-topologie. Si un commutateur est connecté à plusieurs sous-topologies, il est alors scindé en autant de calculateurs virtuels qui seront considérés comme des commutateurs par la suite pour étendre les sous-topologies. Du fait de la récursivité de la topologie, l'extension pour HyperX est proche de celle de PGFT; composition de sous-topologies à partir des ensembles des commutateurs identifiés précédemment: les commutateurs feuilles (45-48) ayant les mêmes commutateurs voisins initialisent les sous-topologies (SG1 et SG2). Ces sous-topologies seront fusionnées pour générer la topologie virtuelle globale.

L'obtention d'une topologie virtuelle structurée à partir d'une topologie physique non-structurée permet, avantageusement,
- de généraliser l'utilisation (et, donc, élargir le champ d'application) des algorithmes de routage pour des topologies physique non-supportées sans avoir à modifier ces algorithmes de routage dédié à ces topologies physiques ;
- de réduire le coût des infrastructures réseau tout en conservant les performances réseau en termes de routage ;
- de découpler la topologie physique de la topologie routée ;
- de scinder un commutateur physique en commutateurs virtuels grâce aux tables par ports.

Avantageusement, la méthode décrite ci-dessus pour l'extraction, à partir d'une topologie physique de réseau, d'une topologie virtuelle adaptée à un algorithme de routage prédéfini, permet :
- la scission d'un commutateur physique en commutateurs virtuels : chaque port du commutateur physique peut appartenir à un commutateur virtuel différent. Ainsi, un commutateur virtuel est un ensemble de port appartenant à un même commutateur physique ;
- l'identification d'un ensemble de commutateurs pouvant servir de base à la construction d'une topologie virtuelle cible. Par exemple, pour un PGFT, les commutateurs feuilles sont censés représenter les commutateurs du premier niveau du PGFT. Ce premier ensemble peut être formé de commutateurs physiques ou virtuels ;
- l'extension de l'ensemble de base en scindant les commutateurs physiques afin que la structure de la topologie virtuelle extraite coïncide avec la structure dédiée à l'algorithme de routage (par exemples PGFT, Torus, HyperX, dragonfly).

Il est à noter que les termes « communicateur réseau », « commutateur » ou « switch » sont utilisés indifféremment pour désigner tout équipement de routage dans un réseau haut-débit.

## Revendications

1. Méthode d'extraction, à partir d'une topologie physique (400) de réseau, d'une topologie virtuelle (500) adaptée à un algorithme de routage prédéfini, la topologie physique (400) de réseau incluant une pluralité de commutateurs (41-48) connectés les uns aux autres à l'aide de leurs ports (0-5) pour recevoir et/ou transmettre des paquets vers ou depuis des commutateurs feuille (45-48) de cette topologie physique (400) de réseau, cette topologie physique (400) de réseau étant différente d'une topologie physique (200) de réseau de type prédéfini de topologie de réseau adaptée à l'algorithme de routage prédéfini, cette méthode comprenant les étapes suivantes:
a) identification, dans la topologie physique (400) de réseau, d'une pluralité de sous-topologies (G1-G4), ces sous-topologies (G1-G4) n'ayant pas de commutateur (41-48) en commun, chaque sous-topologie étant du type prédéfini de topologie de réseau et incluant au moins un commutateur feuille (45-48), aucun commutateur d'une sous-topologie n'étant connecté à un commutateur d'une autre sous-topologie ;
b) extension de chaque sous-topologies en y incluant un ou plusieurs commutateurs qui lui sont directement connectés et n'étant directement connectés à aucune autre sous-topologie de sorte que la sous-topologie étendue soit du type prédéfini de topologie de réseau ;
c) lorsqu'un commutateur (43) est directement connecté à plus d'une sous-topologie, scission de ce commutateur en autant de commutateurs virtuels (43-SG1, 43-SG2), chaque commutateur virtuel comprenant le ou les ports du commutateur scindé à l'aide desquels ce commutateur scindé est connecté aux commutateur(s) d'une sous-topologie, les ports à l'aide desquels le commutateur scindé est connecté à un commutateur n'appartenant encore à aucune sous-topologie étant répartis entre les commutateurs virtuels, ces commutateurs virtuels étant considérés comme étant des commutateurs;
d) répétition des étapes b) et c) jusqu'à ce que chaque commutateur soit compris dans une sous-topologie, la topologie virtuelle étant composée desdites sous-topologies.

2. La méthode de la revendication 1, comprenant en outre une étape d'utilisation par l'algorithme de routage de la topologie virtuelle extraite.

3. La méthode de la revendication 1 ou 2, dans laquelle la topologie virtuelle extraite est une topologie structurée adaptée à un algorithme de routage destiné à une topologie structurée, une topologie structurée étant une topologie définie par un formalisme mathématique prédéterminé.

4. La méthode selon l'une quelconque des revendications précédentes, dans laquelle le type prédéfini de topologie de réseau est choisi parmi une liste comprenant une topologie de réseau PGFT, une topologie de réseau Tore 2D, une topologie de réseau Tore 3D, une topologie de réseau HyperX.

5. Une méthode de routage dans une topologie physique non structurée d'un réseau haut-débit selon un algorithme de routage destiné à une topologie structurée, une topologie structurée étant une topologie définie par un formalisme mathématique prédéterminé, cette méthode comprenant les étapes suivantes :
- découverte de la topologie physique non structurée ;
- analyse et validation de la topologie physique découverte ;
- extraction, selon une méthode présentée dans l'une quelconque des revendications 1 à 4, d'une topologie virtuelle adaptée à l'algorithme de routage ;
- analyse et validation de la structure de la topologie virtuelle extraite ;
- calcul des tables de routage adaptées à la topologie virtuelle extraite ;
- fusion des tables de routage associées à la topologie physique de sorte à obtenir des tables de routage adaptées à la topologie virtuelle structurée ;
- chargement, dans la topologie virtuelle extraite, des tables de routage fusionnées.

6. Produit programme d'ordinateur implémenté sur un support mémoire, susceptible d'être mis en œuvre au sein d'une unité de traitement informatique et comprenant des instructions pour la mise en œuvre d'une méthode selon l'une des revendications 1 à 4.

## Patentansprüche

1. Verfahren zum Extrahieren einer virtuellen Topologie (500), die an einen vordefinierten Routing-Algorithmus gekoppelt ist, aus einer physikalschen Netzwerktopologie (400), wobei die physikalische Netzwerktopologie (400) eine Vielzahl von Schaltern (41-48) beinhaltet, die mithilfe ihrer Ports (0-5) miteinander verbunden sind, um Pakete von oder zu Folienschaltern (45-48) dieser physikalischen Netzwerktopologie (400) zu empfangen und/ oder zu senden, wobei sich diese physikalsche Netzwerktopologie (400) von einer physikalschen Netzwerktopologie (200) einer vordefinierten Art von Netzwerktopologie unterscheidet, die an den vordefinierten Routing-Algorithmus gekoppelt ist, wobei dieses Verfahren die folgenden Schritte umfasst:
a) Identifizieren einer Vielzahl von Teiltopologien (G1-G4) in der physikalischen Netzwerktopologie (400), wobei diese Teiltopologien (G1-G4) keinen gemeinsamen Schalter (41-48) aufweisen, jede Teiltopologie in der vordefinierten Art von Netzwerktopologie ist, und mindestens einen Folienschalter (45-48) beinhaltet, wobei kein Schalter einer Teiltopologie mit einem Schalter einer anderen Teiltopologie verbunden ist;
b) Erweitern einer jeden Teiltopologie, indem man einen oder mehrere Schalter darin einbezieht, die direkt damit verbunden sind, und mit keiner anderen Teiltopologie direkt verbunden sind, sodass die erweiterte Teiltopologie in der vordefinierten Art von Netzwerktopologie ist;
c) wenn ein Schalter (43) direkt mit mehr als einer Teiltopologie verbunden ist, Aufteilen dieses Schalters in ebensoviele virtuelle Schalter (43-SG1, 43-SG2), wobei jeder virtuelle Schalter den oder die Ports des aufgeteilten Schalters umfasst, mithilfe derer dieser aufgeteilte Schalter mit dem (den) Schalter(n) einer Teiltopologie verbunden ist, wobei die Ports mithilfe derer der aufgeteilte Schalter mit einem Schalter verbunden ist, der noch keiner Teiltopologie angehört, zwischen den virtuellen Schaltern aufgeteilt sind, wobei diese virtuellen Schalter als Schalter betrachtet werden;
d) Wiederholen der Schritte b) und c) bis jeder Schalter in einer Teiltopologie enthalten ist, wobei sich die virtuelle Topologie aus den Teiltopologien zusammensetzt.

2. Verfahren nach Anspruch 1, das weiter einen Schritt des Verwendens der extrahierten virtuellen Topologie durch den Routing-Algorithmus umfasst.

3. Verfahren nach Anspruch 1 oder 2, wobei die extrahierte virtuelle Topologie eine strukturierte Topologie ist, die mit einem Routing-Algorithmus gekoppelt ist, der für eine strukturierte Topologie bestimmt ist, wobei eine strukturierte Topologie eine Topologie ist, die durch einen vorbestimmten mathematischen Formalismus definiert ist.

4. Verfahren nach einem der vorstehenden Ansprüche, wobei die vordefinierte Art von Netzwerktopologie aus einer Liste ausgewählt ist, die eine PGFT-Netzwerktopologie, eine Tore-2D-Netzwerktopologie, eine Tore-3D-Netzwerktopologie und eine HyperX-Netzwerktopologie umfasst.

5. Verfahren zum Routen in einer nicht strukturierten physikalischen Topologie eines Hochgeschwindigkeitsnetzwerks entsprechend einem Routing-Algorithmus, der für eine strukturierte Topologie bestimmt ist, wobei eine strukturierte Topologie eine Topologie ist, die durch einen vorbestimmten mathematischen Formalismus definiert ist, wobei dieses Verfahren die folgenden Schritte umfasst:
- Entdecken der nicht strukturierten physikalischen Topologie;
- Analysieren und Bestätigen der entdeckten physikalischen Topologie;
- Extrahieren entsprechend einem Verfahren nach einem der Ansprüche 1 bis 4, einer virtuellen Topologie, die an den Routing-Algorithmus gekoppelt ist;
- Analysieren und Bestätigen der Struktur der extrahierten virtuellen Topologie;
- Berechnen der Routing-Tabellen, die mit der extrahierten virtuellen Topologie gekoppelt sind;
- Fusionieren der Routing-Tabellen, die der physikalischen Topologie zugewiesen sind, um Routing-Tabellen zu erhalten, die mit der strukturierten virtuellen Topologie gekoppelt sind;
- Laden der fusionierten Routing-Tabellen in die extrahierte virtuelle Topologie.

6. Computerprogrammprodukt, das in einem Speichermedium implementiert ist, das innerhalb einer digitalen Verarbeitungseinheit angewendet werden kann, und Anweisungen für die Anwendung eines Verfahrens nach einem der Ansprüche 1 bis 4 umfasst.

## Claims

1. Method for extracting, from a physical network topology (400), a virtual topology (500) adapted to a predefined routing algorithm, the physical network topology (400) including a plurality of switches (41-48) connected together using their ports (0-5) to receive and/or transmit packets to or from sheet switches (45-48) of this physical network topology (400), this physical network topology (400) being different from a physical network topology (200) of the predefined type of network topology adapted to the predefined routing algorithm, this method comprising the following steps:
a) identifying, in the physical network topology (400), a plurality of sub-topologies (G1-G4), these sub-topologies (G1-G4) not having any switch (41-48) in common, each sub-topology being of the predefined type of network topology and including at least one sheet switch (45-48), with no switch of a sub-topology being connected to a switch of another sub-topology;
b) extending each sub-topology by including therein one or more switches that are directly connected to it and not being directly connected to any other sub-topology in such a way that the extended sub-topology is of the predefined type of network topology;
c) when a switch (43) is directly connected to more than one sub-topology, splitting this switch into as many virtual switches (43-SG1, 43-SG2), with each virtual switch comprising the port or ports of the split switch with which this split switch is connected to the switch (es) of a sub-topology, the ports with which the split switch is connected to a switch that does not yet belong to any sub-topology being distributed between the virtual switches, these virtual switches being considered as switches;
d) repeating steps b) and c) until each switch is included in a sub-topology, the virtual topology being comprised of said sub-topologies.

2. Method of claim 1, further comprising a step of using via the routing algorithm the extracted virtual topology.

3. Method of claim 1 or 2, wherein the extracted virtual topology is a structured topology adapted to a routing algorithm intended for a structured topology, a structured topology being a topology defined by a predetermined mathematical formalism.

4. The method according to any preceding claim, wherein the predefined type of network topology is chosen from a list comprising a PGFT network topology, a Tore 20 network topology, a Tore 3D network topology, a HyperX network topology.

5. A routing method in an unstructured physical topology of a high-speed network according to a routing algorithm intended for a structured topology, a structured topology being a topology defined by a predetermined mathematical formalism, with this method comprising the following steps:
- discovering the unstructured physical topology;
- analysing and validating the physical topology discovered;
- extracting, according to a method presented in any of claims 1 to 4, a virtual topology adapted to the routing algorithm;
- analysing and validating the structure of the extracted virtual topology,
- calculating routing tables adapted to the extracted virtual topology;
- merging routing tables associated with the physical topology in such a way as to obtain routing tables that are adapted to the structured virtual topology;
- loading, in the extracted virtual topology, merged routing tables.

6. Computer program product implemented on a memory support, able to be implemented within a computer processing unit and comprising instructions for implementing a method according to one of claims 1 to 4.
